# EUROPÄISCHE PATENTANMELDUNG

(11) **EP 1 681 577 A2**
(43) Veröffentlichungstag der Anmeldung: **19.07.2006**
(21) Anmeldenummer: 05112997.1
(22) Anmeldetag: 27.12.2005
(51) Int. Cl.: G01S 3/78, G01S 3/782

(54) **Verfahren für die Bildlagekorrektur eines Monitorbilds**

(30) Priorität: 12.01.2005 DE 102005001429
(71) Anmelder: ROBERT BOSCH GMBH, 70442 Stuttgart (DE)
(72) Erfinder: Schick, Jens, Herrenberg 71083 (DE); Nixdorf, Bernhard, Stuttgart 70469 (DE); Wuerz-Wessel, Alexander, Stuttgart 70599 (DE)

(57) **Zusammenfassung**

Die Erfindung betrifft Verfahren für die Korrektur einer durch die fehlerhafte Einbaulage eines Bildsensors 2 bedingte Bildlage bei einem wenigstens einen Bildsensor 2 und einen Monitor 10 umfassenden Bildaufnahmesystem eines Fahrzeugs 1. Bei diesem Verfahren wird der optische Fluss in einem von dem Bildsensor 2 aufgenommenen Bild erfasst. Aus dem optischen Fluss werden die Lage des Fluchtpunkts und seine Orientierung in Bezug auf die Bildlage des auf dem Monitor 10 wiedergegebenen Bilds ermittelt. Bei einer Abweichung des Fluchtpunkts von seiner Sollage wird die Bildlage korrigiert.

## Beschreibung

### Stand der Technik

Die Erfindung betrifft ein Verfahren für die Bildlagekorrektur eines Monitorbilds nach dem Oberbegriff des Anspruchs 1. Der Monitor ist Bestandteil eines Bildaufnahmesystems, das in Verbindung mit einem Fahrerassistenzsystem in einem Fahrzeug eingesetzt wird, um Aufnahmen des Fahrzeugumfelds zu liefern.

Es ist an sich bekannt, dass Bildaufnahme- und andere Sensorsysteme als ein Baustein eines Fahrzeugsicherheitssystems im Straßenverkehr angewendet werden. Hierbei werden ständig Informationen über den Abstand und die Relativgeschwindigkeit des Fahrzeuges im Verhältnis zu anderen Objekten, d.h. anderen Fahrzeugen und zu den Straßengegebenheiten, verarbeitet. Die Bildaufnahmesysteme und ggf. auch Radarsensoren werden zur Messung geometrischer Größen im Fahrzeugumfeld verwendet, wobei die Radarsensoren für sich gesehen beispielsweise aus der DE 42 42 700 A1 bekannt sind. Mit dieser bekannten Anordnung kann beispielsweise eine Geschwindigkeitsregelung im Fahrzeug derart erweitert werden, dass die Fahrgeschwindigkeit an langsamere, vorausfahrende Fahrzeuge angepasst wird, wenn diese von den Sensorsystemen im voraussichtlichen Kursbereich des Fahrzeugs erfasst werden. Der Kursbereich kann dabei beispielsweise mit Hilfe von Gierraten-, Lenkwinkel-, Querbeschleunigungssensoren, über die Radgeschwindigkeiten, oder auch mit den erwähnten Bildaufnahme- oder mit Navigationssystemen bestimmt werden. Vielfach werden die von dem Bildaufnahmesystem erfassten Bilder des Fahrzeugumfelds entweder in natürlicher oder verarbeiteter Form dem Fahrer auch auf einem in seinem Sichtfeld angeordneten Monitor dargestellt. Dadurch kann beispielsweise die Sicht bei widrigen Umweltbedingungen, wie Dämmerung, Nacht und Nebel, verbessert werden, was der Verkehrssicherheit zugute kommt. Bildgebende Funktionen benötigen zur Darstellung für den Fahrer eine zu der jeweiligen Fahrtrichtung passende Bildposition im Monitor. Fährt das Fahrzeug mit einem Nachtsichtsystem beispielsweise geradeaus, sollte der Fluchtpunkt, zur Vermeidung von Irritationen des Fahrers infolge einer durch die Bilddarstellung mit von der Bildmitte abweichendem Fluchtpunkt suggerierten Kurvenfahrt, in der Bildmitte des Monitors liegen. In der Praxis führen jedoch mechanische Toleranzen bei dem Einbau des Bildaufnahmesystems in das Fahrzeug zu einer Fehlausrichtung des Bildsensors des Bildaufnahmesystems in allen drei Winkelfreiheitsgeraden (Nicken, Gieren, Wanken). Eine fehlerhafte Ausrichtung des Bildaufnahmesystems könnte durch Verbesserung der mechanischen Justierung des Bildaufnahmesystems, etwa anlässlich einer Kalibrierung, erreicht werden. Dies ist jedoch mit erheblichem Aufwand verbunden, da dazu in der Regel eine Fachwerkstatt aufgesucht werden muss. Auch dann ist nicht ausgeschlossen, dass sich die Justierung des Bildaufnahmesystems, beispielsweise infolge von Erschütterungen während des Fahrbetriebs und/oder infolge von Temperaturschwankungen, wieder nachteilig verändert. Der schon beschriebene Justiervorgang müsste dann wiederholt werden.

Aus DE 199 62 997 A1 ist weiter ein Verfahren zur Kalibrierung eines Sensorsystems bekannt, mit dem eine Erfassung und Auswertung von Objekten im Kursverlauf eines Fahrzeugs durchgeführt werden. Bei dem Verfahren werden mit dem Sensorsystem charakteristische Daten der Objekte erfasst und die Daten, die unter Berücksichtigung der Eigenbewegung des Fahrzeugs als ruhende oder quasi ruhende Objekte erkannt werden, einer Kalibrierungseinheit zugeführt. In der Kalibrierungseinheit wird die Abweichung der aktuell gemessenen Daten von Daten eines Modells der Objekte als Fehlervektor ermittelt und zur Korrektur der Daten des Modells in Richtung auf eine Minimierung der Abweichung herangezogen.

### Vorteile der Erfindung

Die Erfindung mit den Merkmalen des Anspruchs 1 bietet den Vorteil einer einfachen und leichten Korrektur der Ausrichtung des Fluchtpunkts auf die Bildmitte des von dem Monitor dargestellten Bilds ohne dass dafür eine aufwändige mechanische Korrektur der fehlerhaften Einbaulage des Bildaufnahmesystems erforderlich wäre. Vorteilhaft kann die Ausrichtung des Bildaufnahmesystems über Offsets der Bildkoordinaten korrigiert werden, wobei diese Offsets vorzugsweise zwei Verschiebungen und eine Verdrehung des Bildes umfassen. Diese Offsets können über Vermessung von künstlichen Zielmarken oder, besonders vorteilhaft, über die Erfassung natürlicher Merkmale als Zielmarken ermittelt werden. Dazu wird vorteilhaft der optische Fluss bei Bewegung des Fahrzeugs relativ zu den Zielmarken erfasst. Aus dem optischen Fluss werden der Fluchtpunkt und dessen Lage in Bezug auf das auf dem Monitor dargestellte Bild erfasst. Bei einer Abweichung des Fluchtpunkts von seiner Solllage wird dann die Bildlage korrigiert. Besonders vorteilhaft werden zusätzlich Sensorsignale und weitere Betriebskenngrößen des Fahrzeugs, wie insbesondere die Geschwindigkeit, für die Feststellung der Lage des Fluchtpunkts herangezogen. In einer einfachen Ausführungsvariante der Erfindung findet eine Überprüfung der Lage des Fluchtpunkts nur bei einer Geradeausfahrt des Fahrzeugs statt. Eine Feststellung komplexerer Justierfehler ist während einer Kurvenfahrt des Fahrzeugs möglich. Mittels einer Fahrdynamikregelung können vorteilhaft Gier-, Nick- und Wankwinkel erfasst und in ihre statischen und dynamischen Anteile zerlegt werden. Ein statischer Anteil kann dabei auf eine fehlerhafte Justierung des Bildaufnahmesystems zurückzuführen sein und daher für eine Korrektur der Bildlage verwendet werden. Vorteilhaft findet eine Überprüfung erst bei Überschreiten einer vorgebbaren Grenzgeschwindigkeit statt, weil dann ein besseres Signal-Rausch-Verhältnis der Vektoren des optischen Flussfelds gegeben ist. Weitere Vorteile der Erfindung ergeben sich aus den weiteren Unteransprüchen.

### Zeichnung

Ausführungsbeispiele der Erfindung werden nachfolgend unter Bezug auf die Zeichnung beschrieben. Dabei zeigt
- Figur 1: ein in Seitenansicht schematisch dargestelltes Fahrzeug;
- Figur 2: ein Monitorbild bei einem gut justierten Bildaufnahmesystem;
- Figur 3: ein Monitorbild bei einem dejustierten Bildaufnahmesystem.

### Beschreibung der Ausführungsbeispiele

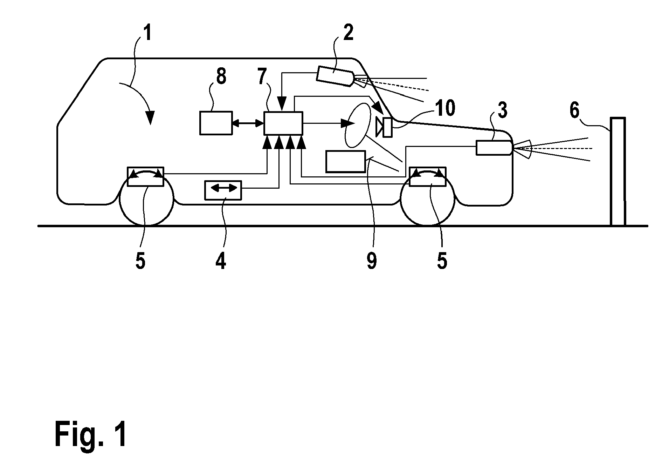

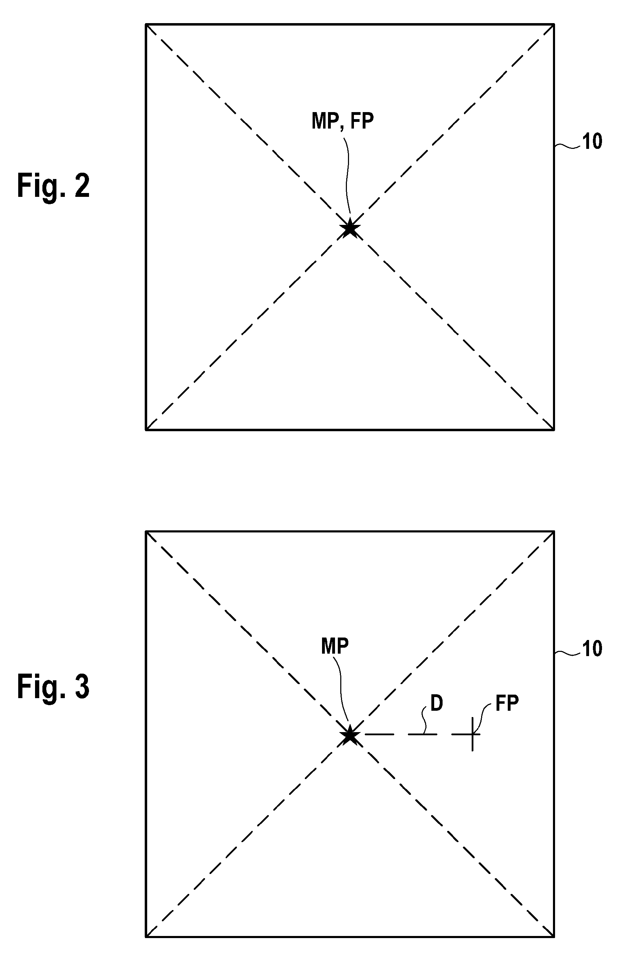

Figur 1 zeigt eine schematische Darstellung eines Fahrzeugs 1 in Seitenansicht und eine mögliche Ausgestaltung eines in dem Fahrzeug 1 angeordneten Bildaufnahmesystems. Als Sensoren, die entweder unmittelbar zu diesem Bildaufnahmesystem gehören, bzw. mit diesem zusammenwirken, sind in Figur 1 nur beispielhaft eine elektronische Kamera als Bildsensor 2, ein Radarsensor 3, ein Beschleunigungssensor 4, Radsensoren 5 und ein Lenkwinkelsensor 9 dargestellt. Diese Sensoren können, wie in Figur 1 mit den Abstrahlfeldern und den Pfeilen für die zu erfassenden mechanischen Größen angedeutet, auf die Erfassung der Bewegung des Fahrzeugs 1 und des vorderen Fahrzeugumfelds ausgerichtet sein. Das Bildaufnahmesystem umfasst weiter ein Funktionsmodul 7 für die Auswertung der Sensorsignale und eine entweder in das Funktionsmodul 7 integrierte oder von dem Funktionsmodul 7 getrennt angeordnete Speichereinrichtung 8 für die Speicherung von Daten. Für die Darstellung von Bildern des Bildaufnahmesystems und anderen Daten ist als weitere Komponente des Bildaufnahmesystems ein in dem Sichtbereich des Fahrers angeordneter Monitor 10 vorgesehen.
Bildgebende Funktionen benötigen zur Darstellung für den Fahrer des Fahrzeugs 1 eine zu der Fahrtrichtung des Fahrzeugs 1 passende Bildposition auf dem Monitor 10. Fährt das Fahrzeug 1 beispielsweise mit einem in das Bildaufnahmesystem 1 integrierten Nachtsichtsystem geradeaus, sollte der Fluchtpunkt FP, zur Vermeidung von Irritationen des Fahrers, in der Bildmitte des in Figur 2 schematisch dargestellten Monitors 10 sein, also mit dessen Mittelpunkt MP übereinstimmen. Wenn dies nicht der Fall ist, weil beispielsweise das Bildaufnahmesystem nicht optimal justiert ist, kann beispielsweise, wie in Figur 3 dargestellt, bei einer Geradeausfahrt des Fahrzeugs 1, die Lage des Fluchtpunkts FP von dem Mittelpunkt MP des Monitors 10 abweichen. In Figur 3 weicht der Fluchtpunkt FP um die Entfernung D von dem Mittelpunkt MP des Monitors 10 ab und ist nach rechts versetzt. Dies kann bei dem Fahrer des Fahrzeugs 1 den Eindruck hervorrufen, dass das Fahrzeug 1 gerade eine Rechtskurve befährt, obwohl es sich in Wirklichkeit geradeaus bewegt. Insbesondere bei widrigen Wetterbedingungen und schlechter Sicht kann dies bei dem Fahrer zu starken Irritationen führen, da er, außer der Darstellung auf dem Monitor 10, kaum zuverlässige Orientierungsmöglichkeiten hat. Die dadurch entstehende Verunsicherung des Fahrers kann auch zu verkehrsgefährdenden Lenkmanövern führen, wenn er, als Gegenreaktion, beispielsweise nach links steuert und dadurch auf die Gegenfahrbahn gerät.

Um die durch Einbaufehler verursachte Verlagerung des Fluchtpunkts FP zu kompensieren, macht sich die Erfindung die Tatsache zunutze, dass infolge der Relativbewegung des Fahrzeugs 1 zu Objekten 6 ein optischer Fluss entsteht, der gemessen und ausgewertet werden kann. Bei den Objekten 6 handelt es sich um natürliche, örtlich unbekannte Merkmale entlang der Fahrtstrecke des Fahrzeugs 1, die als Zielinarken benutzt werden. Bei Geradeausfahrt und optimal justiertem Bildaufnahmesystem bewegen sich alle Merkmale aus einem Zentrum im Bild (Fluchtpunkt FP) radial zu den Außenseiten des Bilds (Bildfluss oder optischer Fluss) Dieser Fluchtpunkt FP stimmt also idealerweise mit dem Mittelpunkt MP des Monitors 10 überein. Der Bildfluss kann über bekannte Algorithmen ermittelt werden. Bei einer tatsächlich durchgeführten Kurvenfahrt wandert der Fluchtpunkt FP in einer funktionalen Abhängigkeit von der Bahnkrümmung der durchfahrenen Kurve weg von seiner bei Geradeausfahrt eingenommenen Lage in dem Mittelpunkt MP des Monitors 10. Bei einem nicht optimal justierten Bildaufnahmesystem besteht der dann beobachtete optische Fluss aus einem durch die Bahnkrümmung der Kurve gekrümmten optischen Fluss, der zudem, infolge der Einbaufehler des Bildaufnahmesystems, noch verschoben und/oder verdreht ist. Die neue Lage des Fluchtpunkts FP ergibt sich damit sowohl aus dem gekrümmten als auch aus dem verschobenen Bildfluss. Durch Kenntnis der Bahnkrümmung über Inertialsensoren kann die Krümmung des Bildflusses näherungsweise ermittelt und die durch die Bahnkrümmung verursachte Verschiebung des Fluchtpunktes FP herausgerechnet werden. Die verbleibende Verschiebung des Fluchtpunktes FP ist dann auf die Einbaufehler des Bildaufnahmesystems zurückzuführen. Bei Kenntnis dieser Verschiebung kann die Bildlage dann derart korrigiert werden, dass der Fluchtpunkt FP bei Geradeausfahrt wieder in dem Mittelpunkt MP des Monitors 10 zu liegen kommt. Die durch das beschriebene Verfahren ermittelten Korrekturwerte können zweckmäßig in der Speichereinrichtung 8 abgelegt und von dort auch wieder ausgelesen werden. Besonders vorteilhaft lässt sich die Bahnkrümmung mit relativ guter Näherung aus dem Lenkwinkel des Fahrzeugs 1 ableiten, der mit einem zusätzlichen Lenkwinkelsensor 9 messbar ist. Noch bessere Ergebnisse können vorteilhaft dadurch erzielt werden, dass Lenkwinkel und Fahrzeuggeschwindigkeit in einem dynamischen Modell der Fahrzeugbewegung berücksichtigt werden, bei dem auch Gier-, Nick- und Wankwinkel betrachtet werden. Weiterhin kann die Lage des Fluchtpunkts FP mit Hilfe der Geschwindigkeit des Fahrzeugs 1 und der Gierrate des Fahrzeugs 1 ermittelt werden.

In einer weiteren Ausführungsvariante kann die Schätzung der Bahnbewegung des Fahrzeugs und der Lage des Fluchtpunkts FP auch aus dem optischen Fluss allein erfolgen, das heißt, ohne zusätzliche Sensorsignale. Diese Methode bietet sich demnach für Fahrzeuge an, die nicht über zusätzliche Sensoren verfügen. Bei Kurvenfahrt des Fahrzeugs 1 können sowohl Gier- und Nickwinkel, als auch der Wankwinkel ermittelt werden. Aus der festgestellten Verschiebung des Fluchtpunkts FP können Fehler bezüglich Gier-, Nick- und Wankwinkel kompensiert werden Dagegen kann bei Geradeausfahrt des Fahrzeugs 1 der Wankwinkel nicht aus dem optischen Fluss ermittelt werden, weil dieser dann radialsysmmetrisch ist. Bei einer Kurvenfahrt dagegen ist der optische Fluss gekrümmt. Verkippungen im Bild lassen sich so leicht ermitteln und der Wankwinkel daraus ableiten. Betrachtet man nämlich bei einem dichten Flussfeld des optischen Flusses die Projektion des gemessenen Flusses auf die vertikale Bildachse, und zwar für jede Bildspalte separat, so ergibt sich eine Linie, an der die Richtung der Flussprojektion umklappt. Auf dieser Linie liegt dann auch der Fluchtpunkt FP. Diese Linie beschreibt aber auch den Horizont der entsprechend aktuellen Bewegung, wobei es sich nicht um den Horizont der Ebene handelt, auf der sich das Fahrzeug mit dem Bildaufnahmesystem bewegt, es sei denn, dass keine Nickbewegung stattfindet. Dann wären die Horizonte identisch. Ist die Horizontlinie gegen die Bildzeile verkippt, dann spiegelt der Kippwinkel den Wankwinkel wider. Dieser muss dann allerdings noch um denn dynamischen Wankwinkel korrigiert werden, der sich aus Fahrdynamikdaten ableiten lässt. Der um diesen dynamischen Anteil korrigierte stationäre Teil des Wankwinkels ist dann auf die fehlerhafte Einbaulage des Bildaufnahmesystems zurückzuführen. Diese kann dann auf einfache Weise durch eine angepasste Rotation des Bildes kompensiert werden. Eine analoge Trennung in statische und dynamische Komponenten gilt auch für Gier- und Nickwinkel. Besonders vorteilhaft erfolgt eine Lagekorrektur des Fluchtpunkts FP bei einer höheren Geschwindigkeit des Fahrzeugs, da das Signal-Rausch-Verhältnis der Vektoren (Länge und Richtung) des optischen Flussfelds dann günstiger ist. Vorteilhaft kann daher beispielsweise vorgesehen werden, dass eine ggf. erforderliche Korrektur der Bildlage erst dann durchgeführt wird, wenn eine vorgebbare Grenzgeschwindigkeit nach Inbetriebnahme des Fahrzeugs 1 erstmalig überschritten worden ist. Als Grenzgeschwindigkeit wird vorteilhaft ein Geschwindigkeitswert zwischen etwa 30 km/h und 70 km/h vorgesehen. Falls bei einem Bildaufnahmesystem diese Korrektur ein aktives Eingreifen des Fahrers vorsieht kann diese Korrektur auch nach dem Einschalten des Korrektursystems bei Geschwindigkeiten oberhalb der Grenzgeschwindigkeit erfolgen. Da infolge von Erschütterungen im Fahrbetrieb und/oder durch Temperatureinflüsse über die Lebensdauer des Fahrzeugs 1 mit Veränderungen der Bildlage zu rechnen ist, wird die Ermittlung des Fluchtpunkts FP und eine je nach Abweichung des Fluchtpunkts FP erforderliche Lagekorrektur des Bildes vorteilhaft regelmäßig wiederholt. Vorteilhaft kann eine Überprüfung bzw. Korrektur der Bildlage jedes Mal dann durchgeführt werden, wenn das Fahrzeug 1 nach jeder Inbetriebnahme jeweils erstmals die vorgebbare Grenzgeschwindigkeit überschreitet. Mit Rücksicht auf den Fahrer kann vorteilhaft vorgesehen sein, dass die Überprüfung bzw. Lagekorrektur immer nur dann durchgeführt wird, wenn der Monitor 10 gerade dunkel getastet ist, ausgeschaltet ist oder andere Informationen als ein Bild des Bildsensors 2 wiedergibt. Die Dunkeltastung kann auch ereignisgesteuert herbeigeführt, also beispielsweise durch den Prüfungsvorgang selbst gesteuert sein. Alternativ kann dem Fahrer auf dem Monitor 10 auch ein Hinweis auf die gerade stattfmdende Prüfung mitgeteilt werden.

## Patentansprüche

1. Verfahren für die Korrektur einer durch die fehlerhafte Einbaulage eines Bildsensors (2) bedingte Bildlage bei einem wenigstens einen Bildsensor (2) und einen Monitor (10) umfassenden Bildaufnahmesystem eines Fahrzeugs (1), **dadurch gekennzeichnet, dass** der optische Fluss in einem von dem Bildsensor (2) aufgenommenen Bild erfasst wird, dass die Lage des Fluchtpunkts (FP) aus diesem optischen Fluss ermittelt wird, dass die Lage des Fluchtpunkts (FP) in Bezug auf die Bildlage des auf dem Monitor wiedergegebenen Bilds ermittelt wird, und dass bei einer Abweichung des Fluchtpunkts (FP) von seiner Sollage die Bildlage korrigiert wird.

2. Verfahren nach Anspruch 1, **dadurch gekennzeichnet, dass** für die Feststellung der Lage des Fluchtpunkts (FP) zusätzliche Sensorsignale, insbesondere Signale eines Lenkwinkelsensors und/oder Betriebskenngrößen des Kraftfahrzeugs (1), wie insbesondere die Geschwindigkeit, ausgewertet werden.

3. Verfahren nach einem der vorhergehenden Ansprüche, **dadurch gekennzeichnet, dass** die Lage des Fluchtpunkts (FP) bei Geradeausfahrt des Fahrzeugs (1) ermittelt wird.

4. Verfahren nach einem der vorhergehenden Ansprüche, **dadurch gekennzeichnet, dass** die Lage des Fluchtpunkts (FP) bei Kurvenfahrt des Fahrzeugs (1) ermittelt wird.

5. Verfahren nach einem der vorhergehenden Ansprüche, **dadurch gekennzeichnet, dass** der Wankwinkel des Fahrzeugs (1) ermittelt wird, dass der Wankwinkel in einen statischen und einen dynamischen Anteil zerlegt wird, und dass der statische Anteil des Wankwinkels für eine Korrektur der Bildlage des Monitors (10) berücksichtigt wird.

6. Verfahren nach einem der vorhergehenden Ansprüche, **dadurch gekennzeichnet, dass** der Gierwinkel des Fahrzeugs (1) ermittelt wird, dass der Gierwinkel in einen statischen und einen dynamischen Anteil zerlegt wird, und dass der statische Anteil des Gierwinkels für eine Korrektur der Bildlage des Monitors (10) berücksichtigt wird.

7. Verfahren nach einem der vorhergehenden Ansprüche, **dadurch gekennzeichnet, dass** der Nickwinkel des Fahrzeugs (1) ermittelt wird, dass der Nickwinkel in einen statischen und einen dynamischen Anteil zerlegt wird, und dass der statische Anteil des Nickwinkels für eine Korrektur der Bildlage des Monitors (10) berücksichtigt wird.

8. Verfahren nach einem der vorhergehenden Ansprüche, **dadurch gekennzeichnet, dass** die Lage des Fluchtpunkts (FP) erst nach Überschreiten einer vorgebbaren Geschwindigkeitsschwelle ermittelt wird.

9. Verfahren nach einem der vorhergehenden Ansprüche, **dadurch gekennzeichnet, dass** die Lage des Fluchtpunkts (FP) während einer Dunkeltastung des Monitors (10) ermittelt wird.

10. Verfahren nach einem der vorhergehenden Ansprüche, **dadurch gekennzeichnet, dass** für die Lageabweichung (Translation, Rotation) des Fluchtpunkts (FP) Grenzwerte vorgegeben werden und dass eine Lagekorrektur der Bildlage des Monitors (10) dann durchgeführt wird, wenn die vorgebbaren Grenzwerte überschritten sind.

11. Verfahren nach einem der vorhergehenden Ansprüche, **dadurch gekennzeichnet, dass** die Lage des Fluchtpunkts (FP) periodisch überprüft wird und zwar vorzugsweise dann, wenn das Fahrzeug (1) nach Inbetriebnahme eine vorgebbare Grenzgeschwindigkeit überschreitet.

12. Verfahren nach einem der vorhergehenden Ansprüche, **dadurch gekennzeichnet, dass** die Grenzgeschwindigkeit zwischen 30 km/h und 70 km/h liegt.

13. Verfahren nach einem der vorhergehenden Ansprüche, **dadurch gekennzeichnet, dass** die Korrekturwerte für die Korrektur der Bildlage des Monitors (10) gespeichert werden.
